**Europäisches Patentamt**

**European Patent Office**

**Office européen des brevets**

(19)

(11) Veröffentlichungsnummer : **0 154 759**
**B1**

(12) **EUROPÄISCHE PATENTSCHRIFT**

(45) Veröffentlichungstag der Patentschrift :
11.10.89

(51) Int. Cl.⁴ : **B 60 J 7/05**

(21) Anmeldenummer : 84710038.5

(22) Anmeldetag : 18.12.84

(54) Hebeschiebedach für Fahrzeuge.

(30) Priorität : 05.03.84 DE 3408056

(43) Veröffentlichungstag der Anmeldung :
18.09.85 Patentblatt 85/38

(45) Bekanntmachung des Hinweises auf die Patenterteilung : 11.10.89 Patentblatt 89/41

(84) Benannte Vertragsstaaten :
DE FR GB IT NL SE

(56) Entgegenhaltungen :
DE–A– 3 129 900
DE–A– 3 311 452
FR–A– 2 467 094

(73) Patentinhaber : Webasto AG Fahrzeugtechnik
Kraillingerstrasse 5
D-8035 Stockdorf (DE)

(72) Erfinder : Fürst, Arpad
Ravensburger Ring 49
D-8000 München 60 (DE)

Jouve, 18, rue St-Denis, 75001 Paris, France

## Beschreibung

Die Erfindung bezieht sich auf ein Hebeschiebedach für Fahrzeuge mit einem dem wahlweisen Verschließen und mindestens teilweisen Freigeben einer Dachöffnung dienenden Deckel, der mittels einer Betätigungseinrichtung ausgehend von einer Schließstellung um eine an oder nahe seinem vorderen Ende liegende Querachse unter Anheben seiner Hinterkante in eine Schräglage verschwenkbar und entlang von zu beiden Seiten der Dachöffnung verlaufenden Führungsschienen nach hinten in eine Offenstellung verschiebbar ist, sowie mit einer in Abhängigkeit von der Deckelverstellbewegung selbsttätig verstellbaren Fangeinrichtung, die zum Niederhalten des hinteren Deckelendes in der Deckelschließstellung mit einem Widerlager in Eingriff bringbar ist und in ständigem Eingriff mit einem, z B. als Transportschlitten ausgebildeten Antriebsglied steht, das während der Schwenkbewegung der Deckelhinterkante in Absenkrichtung der Fangeinrichtung eine Zusatzbewegung gegenüber dem Deckel aufzwingt (Siehe DE-A-3 311 452).

Es ist bei einem solchen Hebeschiebedach bekannt (DE-A-31 29 900), das Widerlager am Deckel zu befestigen und als Fangeinrichtung einen an der stationären Führungsschiene schwenkbar gelagerten Fanghebel vorzusehen, der über eine Stange mittels einer Rückstellfeder in einer Richtung vorgespannt ist, die der Ausstellbewegung des Deckels und der Freigabe des Widerlagers durch die Fangeinrichtung entspricht. Die den Fanghebel betätigende Stange kommt bei dem Verschwenken des Deckels in Schließstellung über eine Mitnehmerkupplung mit dem Deckel in Eingriff, um die Fangeinrichtung entgegen Federkraft mit dem Widerlager in Eingriff zu bringen. Beim Ausstellen des Deckels gibt die Mitnehmerkupplung die Stange frei für eine Rückstellbewegung unter dem Einfluß der vorgespannten Rückstellfeder. Bei der bekannten Lösung unterstützt zwar die Fangeinrichtung in gewissem Umfang die Ausstellbewegung des Deckels. Die Ausstellhilfe wird jedoch lediglich durch die notwendigerweise relativ schwache Rückstellfeder geleistet. Auf Grund des in der Ausstellphase über Federkraft erfolgenden gegenseitigen Eingriffs zwischen Fanghebel und Widerlager kann es leicht zu Klappergeräuschen, beispielsweise bedingt durch Fahrbahnunebenheiten, kommen. Die Stabilität der Dachfunktionsteile läßt zu wünschen übrig.

Auch bei einem anderen bekannten Hebeschiebedach (DE-A-33 11 452) ist das Widerlager am Deckel angebracht, während die Fangeinrichtung im Bereich der Führungsschiene sitzt. In diesem Falle erfolgt zwar eine Zwangsmitnahme der Fangeinrichtung durch die Betätigungseinrichtung des Daches sowohl beim Hochstellen als auch beim Absenken der Deckelhinterkante. Die Fangeinrichtung kommt jedoch mit dem Widerlager erst in Eingriff, nachdem der Deckel seine Schließstellung bereits erreicht hat. Umgekehrt wird die Fangeinrichtung außer Eingriff mit dem Widerlager gebracht, bevor der Deckel seine Ausstellbewegung beginnt. Die Fangeinrichtung hat daher auf den Deckel in der kritischen Schwenkphase keinen stabilisierenden Einfluß, und sie läßt sich auch nicht als Ausstellhilfe nutzen.

Der im Anspruch 1 angegebenen Erfindung liegt die Aufgabe zugrunde, ein Hebeschiebedach der eingangs genannten Art zu schaffen, das sich durch weiter erhöhte Stabilität und einen besonders robusten Aufbau auszeichnet und bei dem der Deckel selbst bei sehr hohen Fahrzeuggeschwindigkeiten sowohl sicher in der Schließstellung gehalten als auch problemlos und frei von Klappergeräusen verschwenkt werden kann.

Diese Aufgabe wird erfindungsgemäß dadurch gelöst, daß das Widerlager an einem feststehenden Teil des Daches angebracht ist, während die verstellbare Fangeinrichtung am Deckel montiert ist und dessen Verstellbewegung mitmacht, und daß das Antriebsglied während der Schwenkbewegung der Deckelhinterkante auch in Hochstellsenkrichtung der Fangeinrichtung eine Zusatzbewegung gegenüber dem Deckel aufzwingt, die in der Hochstellrichtung die Aufwärtsbewegung der Deckelhinterkante unterstützt.

Bei der erfindungsgemäßen Lösung hält die Fangeinrichtung nicht nur den Deckel in seinem hinteren Bereich über eine Zwangsverbindung mit dem Deckelantrieb in Schließstellung, sondern die Fangeinrichtung unterstützt, gleichfalls über eine Zwangsantriebsverbindung auch auf wirkungsvolle Weise das Ausstellen des Deckels. Durch die Montage der verstellbaren Fangeinrichtung am Deckel lassen sich die im Falle der Anordnung nach der DE-A-31 29 900 auftretenden Kupplungsprobleme vermeiden. Zugleich kann die Fangeinrichtung, im Gegensatz zu der Einrichtung nach der DE-A-33 11 452, ohne weiteres so ausgelegt werden, daß sie im Zusammenwirken mit dem Widerlager der Deckelhinterkante eine Zwangsbewegung auf einem relativ großen Schwenkbereich in beiden Schwenkrichtungen des Deckels vermittelt.

Bevorzugte weitere Ausgestaltungen der Erfindung ergeben sich aus den Unteransprüchen. Die Merkmale der Ansprüche 2 bis 5 führen zu einem besonders robusten Aufbau, der mit einer vergleichsweise geringen Anzahl von bewegten Teilen auskommt. Mit den Merkmalen der Ansprüche 6 und 7 läßt sich das Gestänge der Fangeinrichtung den bestehenden geometrischen Gegebenheiten besonders gut anpassen und seinerseits sicher führen. Die Merkmale der Ansprüche 8 und 9 gestatten es, die Querachse, um welche der Deckel seine Schwenkbewegung ausführt, an eine gewünschte Stelle zu legen und außerdem für eine robuste Halterung des Deckels in seinem vorderen Bereich zu sorgen. Die Ausbildung gemäß den Ansprüchen 10 und 11 erlaubt eine Minimierung der notwendigen Gelenkstellen. Es versteht sich, daß es grundsätzlich aber auch möglich ist, die Kulissenstifte am Deckelträger anzubringen und die Kulissenschlitze im Transportschlitten auszubilden.

Mit den Merkmalen der Ansprüche 12 bis 15 wird die Stabilität des ausgestellten Deckels auf einfache Weise weiter erhöht. Das Merkmal des Anspruchs 16 führt zu einer weiteren Unterstützung der Ausstellbewegung des Deckels. Mit dem Merkmal des Anspruchs 17 wird eine spielarme und verkantungssichere Führung der Transportschlitten gewährleistet, ohne daß darunter die nutzbare Öffnungsweite des Daches leidet. Mit den Merkmalen der Ansprüche 18, 19 und 20 werden auf einfache Weise unerwünschte Verschiebebewegungen des Deckels verhindert, während der Deckel verschwenkt wird.

Entsprechend den Ansprüchen 21 und 22 eignet sich die erfindungsgemäße Lösung sowohl für Dächer, bei denen der Deckel über der festen Dachhaut zurückgeschoben wird, als auch für Dächer, bei denen das Öffnen des Daches durch Zurückfahren des Deckels unter dem festen Dachteil erfolgt.

Die Erfindung ist im folgenden an Hand von bevorzugten Ausführungsbeispielen näher erläutert. In den beiliegenden Zeichnungen zeigen :

Fig. 1 eine Seitenansicht eines Hebeschiebedachs nach der Erfindung bei ausgestelltem Deckel,

Fig. 2 eine Ansicht entsprechend Fig. 1 bei in Schließstellung befindlichem Deckel,

Fig. 3 einen Schnitt durch das Hebeschiebedach bei ausgestelltem Deckel in Blickrichtung der Pfeile III-III der Fig. 7,

Fig. 4 einen Schnitt entsprechend Fig. 3 bei in Schließstellung befindlichem Deckel,

Fig. 5 einen Schnitt entlang der Linie V-V der Fig. 7 bei ausgestelltem Deckel,

Fig. 6 eine Draufsicht auf eine der Führungsschienen des Schiebedachs nach den Figuren 1 bis 5 und den in dieser Führungsschiene laufenden Transportschlitten,

Fig. 7 eine Draufsicht auf die linke Führungsschiene des Hebeschiebedachs nach den Fig. 1 bis 6 mit Fangeinrichtung und Kulissenführung, jedoch ohne Deckel,

Fig. 8 einen Schnitt entlang der Linie VIII-VIII der Fig. 4,

Fig. 9 eine Teilansicht entsprechend Fig. 1 für eine abgewandelte Ausführungsform der Arretierung, sowie

Fig. 10, 11 und 12 Schnitte durch eine abgewandelte Ausführungsform eines Hebeschiebedachs mit unter einem festen Dachteil nach hinten verstellbarem Deckel.

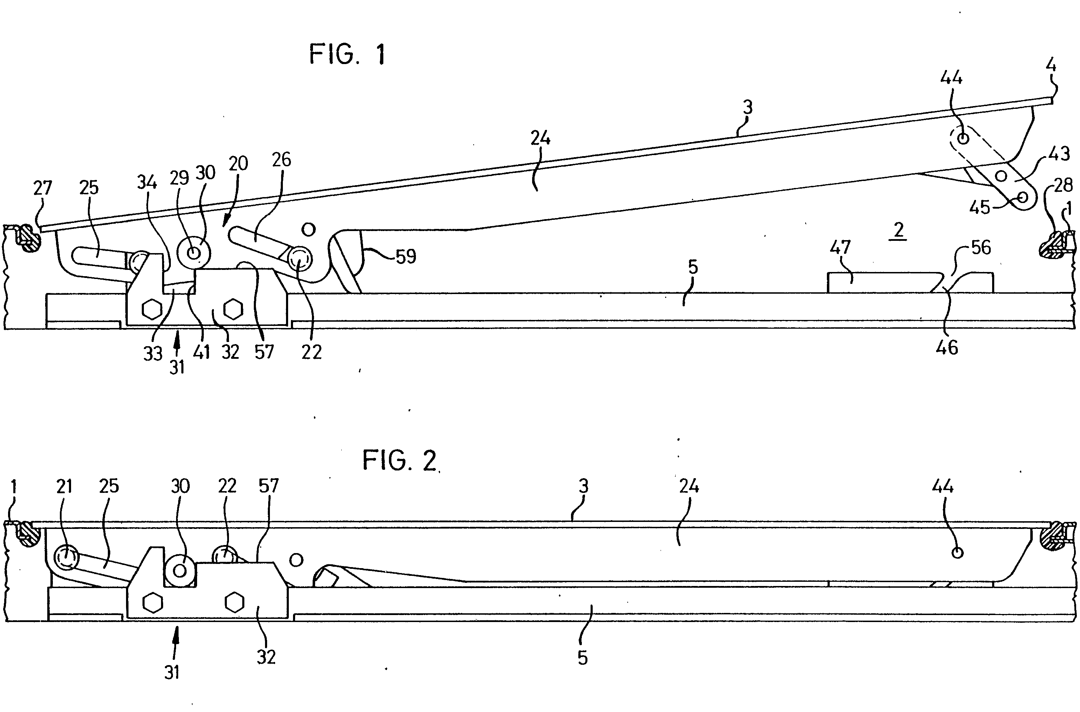

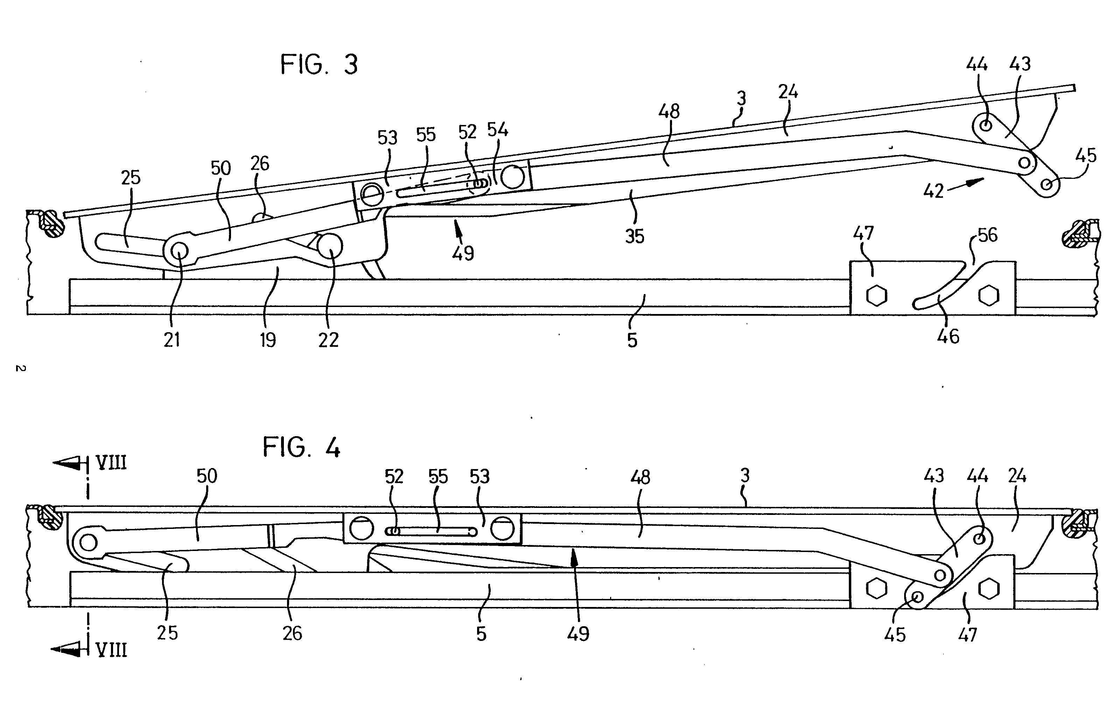

In den Figuren ist mit 1 der feste Teil eines Fahrzeugdaches bezeichnet, das eine rechteckige Dachöffnung 2 aufweist. Die Dachöffnung 2 läßt sich mittels eines Deckels 3 verschließen (Fig. 2 und 4). Der Deckel 3 kann mit seiner Hinterkante 4 über das feste Dachteil 1 ausgestellt werden (Fig. 1, 3 und 5), um eine Belüftung des Fahrzeuginnenraumes zu bewirken. Er läßt sich zwecks Freigabe der Dachöffnung 2 auch nach rückwärts über das feste Dachteil schieben (nicht näher dargestellt).

Zu beiden Seiten der Dachöffnung 2 befindet sich eine in Fahrzeuglängsrichtung verlaufende Führungsschiene 5, die von einer nahe der Vorderkante der Dachöffnung 2 liegenden Stelle nach hinten bis unter das feste Dachteil 1 reicht. Die zu beiden Seiten der Dachöffnung 2 sitzenden Führungsschienen können in nicht näher veranschaulichter Weise auch Teil eines Rahmens sein. Von den Führungsschienen ist in den Figuren nur die in Fahrtrichtung linke Führungsschiene 5 dargestellt. Die gegenüberliegende rechte Führungsschiene und die damit zusammenwirkenden Dachfunktionsteile sind spiegelsymmetrisch zu der Anordnung auf der linken Fahrzeugseite ausgebildet.

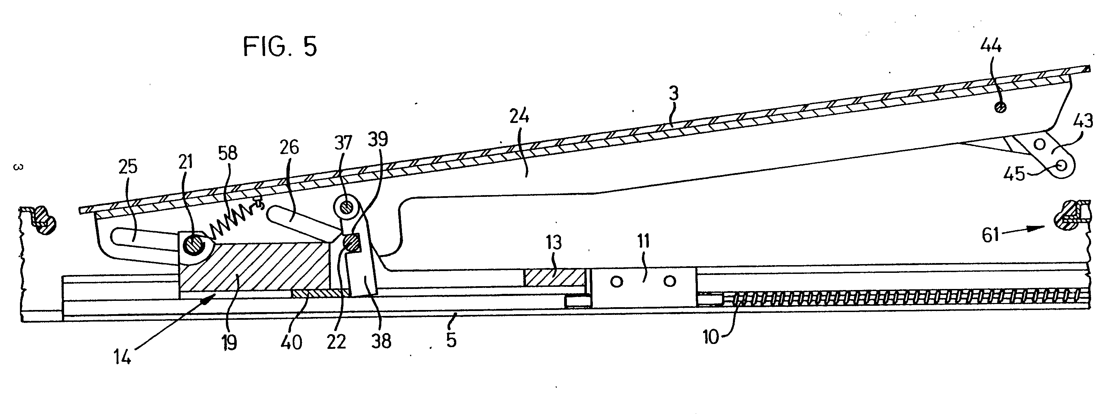

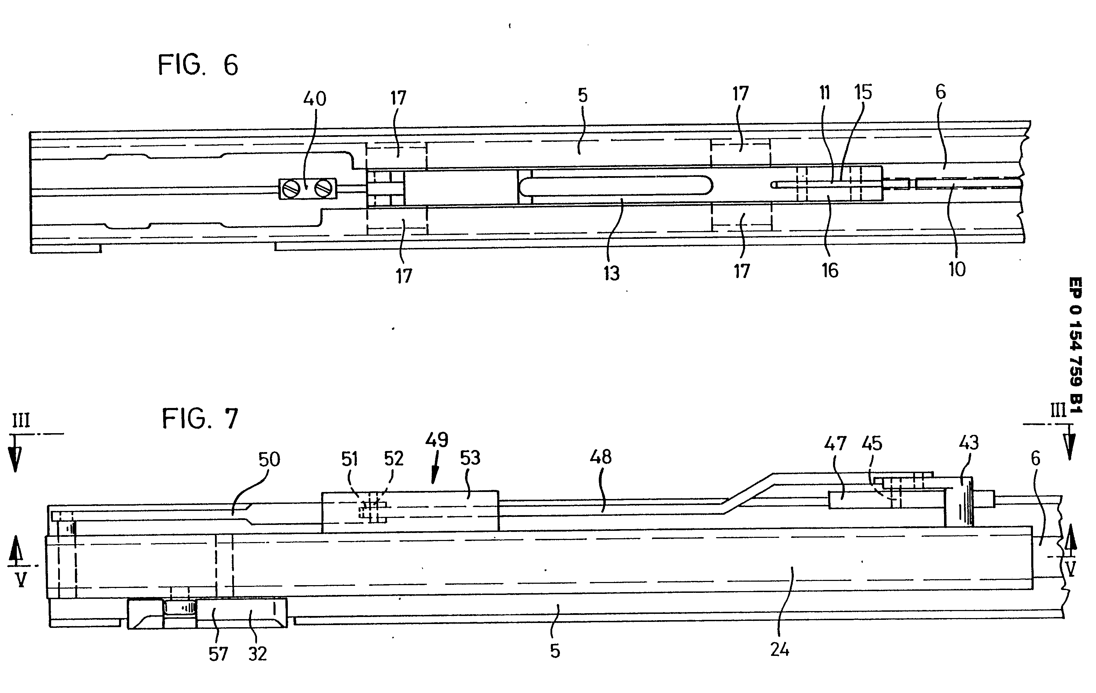

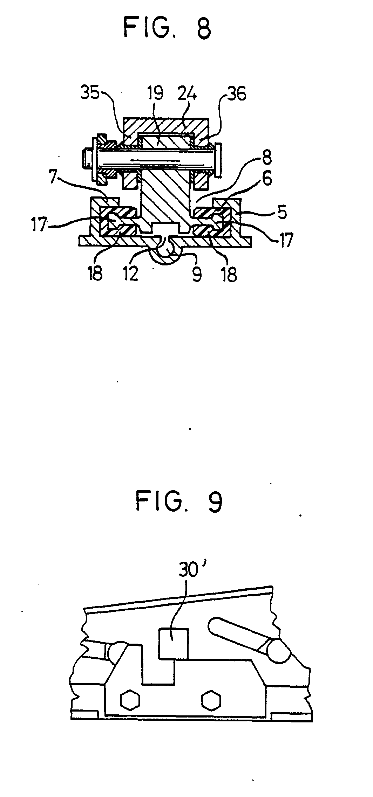

Die Führungsschiene 5 bildet entsprechend Fig. 8 einen im Querschnitt rechteckigen Führungskanal 6, in dessen oberer Begrenzungswand 7 ein Längsschlitz 8 ausgebildet ist. Unter dem Führungskanal 6 sitzt ein Kabelführungskanal 9 zur Aufnahme eines Antriebskabels 10, bei dem es sich vorzugsweise um ein drucksteifes Gewindekabel handelt, das mit einem Antrieb, beispielsweise einem Elektromotor oder einer Handkurbel, über ein Antriebsritzel (nicht dargestellt) in Antriebsverbindung steht. An dem in den Fig. 5 und 6 linken Ende des Antriebskabels 10 ist ein Mitnehmer 11 befestigt, der nach oben durch einen Schlitz 12 in der Trennwand zwischen den Führungskanälen 6, 9 hindurchreicht. Der Mitnehmer 11 ist seinerseits mit dem in den Figuren 5 und 6 rechten, d. h. hinteren Ende eines Führungsabschnitts 13 eines Transportschlittens 14 verbunden, z. B. vernietet. Der Mitnehmer 11 greift dabei entsprechend Fig. 6 in einen Längsschlitz 15 des gabelförmigen Endes 16 des Führungsabschnitts 13. Der Führungsabschnitt 13 weist nahe seinem vorderen und hinteren Ende beidseits quer zur Längsrichtung der Führungsschiene 5 abstehende Gleitschuhträger 17 auf. Auf jedem der vier Gleitschuhträger 17 sitzt ein Gleitschuh 18, der beispielsweise aus Kunststoff besteht und der sich gegen die Wandungen des Führungskanals 6 anlegt. Die Oberseite des Mitnehmers 11 und des Führungsabschnitts 13 können zweckmäßig mit der Oberseite der Führungsschiene 5 bündig liegen. Der Führungsabschnitt 13 des Transportschlittens 14 geht in seinem vorderen Bereich in einen nach oben stehenden Kulissenstiftträger 19 über, der Teil einer insgesamt mit 20 bezeichneten Kulissenführung ist und an seinem oberen vorderen und hinteren Ende jeweils einen Kulissenstift 21 bzw. 22 trägt.

Der Deckel 3 ist an beiden Seiten auf einem Deckelträger 24 mit umgekehrt U-förmigem Querschnitt (Fig. 8) abgestützt. Die Deckelträger 24 können Teil eines Rahmens oder eines Deckelinnenblechs sein. Es kann sich dabei aber auch um getrennte schienenartige Bauteile handeln. Im vorderen Bereich des Deckelträgers 24 sind zwei in der Längsrichtung der Führungsschiene 5 gegeneinander versetzte Kulissenschlitze 25, 26 ausgebildet, in die je einer der Kulissenstifte 21, 22 des Transportschlittens 14 eingreift. Die beiden Kulissenschlitze 25, 26 sind in unterschiedlichem Winkel derart nach hinten abfallend geneigt, daß bei einer Verschiebebewegung des Transportschlittens 14 entlang der Führungsschiene 5 zwischen Stellungen, die den Figuren 1 und 3 sowie 2 und 4 entsprechen, der Deckel 3 zu einer Schwenkbewegung um eine (gedachte) Querachse veranlaßt wird, die mit der vorderen Deckelkante 27 im wesentlichen zusammenfällt. Damit wird ein Eintauchen der Deckelvorderkante 27 unter die Ebene des festen Dachteils 1 beim Ausstellen des Deckels 3 vermieden. Dies ist u. a. erwünscht, um eine Beschädigung einer rings um die Dachöffnung 2 herumlaufenden Dichtung 28 sicher zu vermeiden.

Von dem Deckelträger 24 steht ein Stift 29 quer nach außen ab. Auf dem Stift 29 sitzt ein rollenförmiger Nocken 30, der Teil einer insgesamt mit 31 bezeichneten Arretierung ist. Zu der Arretierung 31 gehört ferner eine Nockenplatte 32, die nahe dem vorderen Ende der Führungsschiene 5 angebracht oder mit dieser einstückig verbunden ist. Die Nokkenplatte 32 weist einen im wesentlichen senkrecht verlaufenden, oben offenen Nookenschlitz 33 auf, dessen Breite dem Durchmesser des Nockens 30 entspricht. Zwischen den nach unten weisenden Schenkeln 35, 36 des Deckelrahmenteils 24 ist an einem quergerichteten Schwenkzapfen 37 ein Sperrhebel 38 aufgehängt (Fig. 5), der zweckmäßig in nicht näher veranschaulichter Weise in Fig. 5 im Uhrzeigersinn federnd vorgespannt ist. Der Sperrhebel 38 ist mit einer von seiner Vorderkante ausgehenden Ausnehmung 39 versehen, in welche der hintere Kulissenstift 22 einrastet (Fig. 5), sobald der Deckel 3 beim Hochstellen seiner Hinterkante 4 die voll ausgestellte Lage erreicht. Auf diese Weise wird bei ausgestelltem Deckel 3 eine Formschlußverbindung zwischen dem Deckel 3 und dem Transportschlitten 14 hergestellt. Wird der Transportschlitten 14 ausgehend von der Stellung gemäß Fig. 5 über das Antriebskabel 10 weiter nach vorne verstellt, wird der Sperrhebel 38 durch Eingriff des unteren Sperrhebelendes mit einem in der Bewegungsbahn des Transportschlittens 14 sitzenden, an der Führungsschiene 5 befestigten Auslöser 40 in Fig. 5 entgegen dem Uhrzeigersinn verschwenkt. Der Sperrhebel 38 kommt dadurch außer Formschlußeingriff mit dem Kulissenstift 22. Der Deckel 3 wird für eine Schwenkbewegung in Schließrichtung freigegeben.

Nahe dem hinteren Deckelende ist an dem Deckelträger 24 ein zu einer verstellbaren Fangeinrichtung 42 gehörender Fanghebel 43 um eine von einem Gelenk 44 gebildete quergerichtete Schwenkachse verschwenkbar angelenkt. Der Fanghebel 43 trägt an seinem von dem Gelenk 44 abliegenden Ende einen quer abstehenden Fangzapfen 45, der mit einem Fangschlitz 46 eines Widerlagers 47 in Eingriff bringbar ist. Das Widerlager 47 ist an der Führungsschiene 5 befestigt. Es kann mit dieser auch einstückig verbunden sein. An einem mittleren Bereich des Fanghebels 43 ist das hintere Ende eines abgewinkelten Gestängeteils 48 angelenkt, das Teil eines mehrteiligen Gestänges 49 der Fangeinrichtung 42 ist. Zu dem Gestänge 49 gehört ein vorderes Gestängeteil 50, dessen gabelförmiges hinteres Ende 51 (Fig. 7) mit dem vorderen Ende des Gestängeteils 48 über ein Gelenk 52 verbunden ist. An dem Deckelträger 24 ist seitlich ein Führungsteil 53 mit umgekehrt U-förmigem Querschnitt angebracht. Der äußere Schenkel 54 des Führungsteils 53 weist einen parallel zum Deckel 3 verlaufenden Führungsschlitz 55 auf. Der das Gelenk 52 bildende Gelenkstift greift mit seinem außenliegenden Ende in den Führungsschlitz 55 ein. Das vordere Ende des Gestängeteils 50 ist an dem vorderen Kulissenstift 21 angelenkt. Zwischen dem vorderen Kulissenstift 21 und dem Deckelrahmenteil 24 erstreckt sich eine Zugfeder 58.

Wenn die zu beiden Seiten der Dachöffnung sitzenden Transportschlitten 14 ausgehend von der in Fig. 5 veranschaulichten Stellung mittels der Antriebskabel 10 nach vorne bewegt werden, wird der Sperrhebel 38 mittels des Auslösers 40 um den Schwenkzapfen 37 entgegen dem Uhrzeigersinn verschwenkt. Der Sperrhebel 38 gibt den Kulissenstift 22 frei. Die bis dahin gesperrte Kulissenführung 20 wird entriegelt. Bei weiterem Vorbewegen des Transportschlittens 14 wird der Deckel in seine vordere Endstellung gebracht, die dadurch begrenzt wird, daß der Nocken 30 an der vorderen Wand 34 des Nockenschlitzes 33 anschlägt. Während die Deckelträger 24 zusammen mit dem Deckel 3 in Verschieberichtung derart arretiert sind, laufen durch die Weiterbewegung des Transportschlittens 14 die Kulissenstifte 21, 22 in den zugehörigen Kulissenschlitzen 25, 26 nach vorne. Dadurch wird der Deckel zu einer Schwenkbewegung um eine Querachse gezwungen, die bei der veranschaulichten Ausführungsform mit der Vorderkante 27 des in seiner vorderen Endlage stehenden Deckels 3 im wesentlichen zusammenfällt. Die Deckelhinterkante 4 bewegt sich nach unten. Die Feder 58 wird gedehnt. Sie speichert dabei durch das Absenken des Deckels freiwerdende potentielle Energie.

Bei in vorderer Endstellung angekommenem Deckel 3 wird durch die fortgesetzte Vorbewegung des Transportschlittens 14 das Gestänge 49 vom Kulissenstift 21 nach vorne gezogen, wobei sich das Gelenk 52 in dem Führungsschlitz 55 nach vorne bewegt (Fig. 3 und 4). Das Gestänge 49 verschwenkt auf Grund der Relativbewegung zwischen den Gestängeteilen 48, 50 und dem Deckelträger 24 den Fanghebel 43 in den Figuren 1, 3 und 5 im Uhrzeigersinn. Dabei ist die Anordnung im Falle der dargestellten bevorzugten Ausführungsform so getroffen, daß die Längsachse des Fanghebels 43 zur Längsachse des Deckels 3 im wesentlichen senkrecht steht, wenn der Fangzapfen 45 das offene obere Ende 56 des Fangschlitzes 46 erreicht. Durch das Eintauchen des Fangzapfens 45 in den Fangschlitz 46 wird der Deckel 3 im Bereich seines hinteren Endes sicher geführt. Erreicht der Deckel 3 schließlich die in den Fig. 2 und 4 veranschaulichte Schließstellung, wird von dem Fanghebel 43 auf den hinteren Bereich des Deckelträgers 24 und damit auch des Dekkels 3 eine Kraft ausgeübt, die schräg nach vorne und unten gerichtet ist. Dadurch werden Aufwärtsbewegungen des Deckels, z. B. verursacht durch einen bei hoher Fahrzeuggeschwindigkeit an der Deckelaußenseite auftretenden Unterdruck, mit Sicherheit vermieden. Auch einem Hochziehen der hinteren Deckelkante 4 von außen bei einem Einbruchsversuch oder einem Aufspringen des Deckels bei einem Unfall ist wirkungsvoll vorgebeugt.

Zum Öffnen des Deckels ausgehend von der Schließstellung gemäß den Fig. 2 und 4 werden die Transportschlitten 14 entlang den Führungsschienen 5 nach hinten gefahren. Durch Anlage des Nockens 30 an der hinteren Wand 41 des Nockenschlitzes 33 wird verhindert, daß der Deckelträger 24 und der Deckel 3 eine solche Verschiebebewegung mitmachen. Die Kulissenstifte 21, 22 wandern in den Kulissenschlitzen 25, 26 nach hinten. Dadurch wird der Deckel 3 zu einer nach oben gerichteten Schwenkbewegung um seine Vorderkante 27 veranlaßt. Diese Schwenkbewegung wird mindestens in ihrem ersten Teil dadurch wesentlich unterstützt, daß dem Fanghebel 43 auf Grund der Gelenkverbindung zwischen dem Transportschlitten 14 und dem Fanghebel 43 über das Gestänge 49 eine Schwenkbewegung entgegen dem Uhrzeigersinn (in den Fig. 2 und 4) aufgezwungen wird. Der Fanghebel 43 stellt sich dadurch ausgehend von der in der Schließstellung des Deckels 3 eingenommenen, schräg nach vorne gerichteten Lage in eine Lage auf, in welcher die Fanghebellängsachse schließlich im wesentlichen senkrecht zur Dekkellängsachse steht, wenn der Fangzapfen 45 das offene Ende 56 des Fangschlitzes 46 erreicht. Auf diese Weise wird von dem Deckelantrieb über die Antriebskabel 10, die Transportschlitten 14, die Gestänge 49 und die zu beiden Deckelseiten sitzenden Fanghebel 43 eine nach oben gerichtete Kraftkomponente auf den hinteren Teil des Deckels 3 übertragen. Es wird so eine besonders wirkungsvolle Ausstellhilfe gewährleistet. Bei der erläuterten Schwenkung der Deckelhinterkante 4 nach oben gibt die Feder 58 die von ihr gespeicherte Energie wieder frei. Dadurch wird die Ausstellbewegung zusätzlich unterstützt.

Wird der Transportschlitten 14, nachdem der Deckel 3 in seiner vorderen Endstellung hochgeschwenkt ist, weiter nach hinten bewegt, wird der Deckel 3 dadurch vom Transportschlitten mitgenommen, daß sich die Kulissenstifte 21, 22 gegen die hinteren Enden der Kulissenschlitze 25, 26 anlegen. Dabei gibt der Auslöser 40 den Sperrhebel 38 für eine Schwenkbewegung um den Schwenkzapfen 37 im Uhrzeigersinn (in Fig. 5) frei. Der hintere Kulissenstift 22 legt sich in die Ausnehmung (39) des Sperrhebels 38 ein. Damit wird für eine Formschlußverbindung zwischen dem Deckel 3 und dem Transportschlitten 14 gesorgt. Diese Formschlußverbindung sichert eine stabile Halterung des Deckels 3 in ausgestellter Lage. In der Übergangsphase, in welcher der Deckel 3 seine Ausstellendlage erreicht hat und dementsprechend der Nocken 30 von der hinteren Wand 41 des Nockenschlitzes 33 freigekommen ist, der Sperrhebel 38 aber noch nicht den Kulissenstift 22 gefaßt hat, erfolgt eine Abstützung des ausgestellten Deckels dadurch, daß der Nocken 30 auf eine Nockenbahn 57 der Nockenplatte 32 aufläuft. Diese Nockenbahn 57 schließt sich an die Wand 41 nach hinten an. Wenn der Nocken 30 die Nockenbahn 57 verläßt, hat sich der Sperrhebel 38 mit seiner Ausnehmung 39 um den Kulissenstift 22 gelegt.

Der ausgestellte Deckel 3 kann über die Transportschlitten 14 nach hinten bewegt werden, bis eine nahe dem hinteren Ende des hinteren Kulissenschlitzes 26 liegende Wand 59 des Deckelträgers 24 den hinteren Rand 61 der Dachöffnung 2 praktisch erreicht. Bei der erläuterten Konstruktionsweise läßt sich die Länge der Kulissenführung 20 in Deckelverschieberichtung relativ klein halten, ohne daß die Stabilität der Deckelführung leidet. Auf Grund dessen ist der bei zurückgeschobenem Deckel 3 freigelegte Anteil der Gesamtfläche der Dachöffnung 2 relativ groß. Der über die Kulissenführung 20 nach hinten hinausreichende Führungsabschnitt 13 des Transportschlittens erlaubt relativ große Abstände zwischen den vorderen und hinteren Gleitschuhträgern 17 und damit eine besonders exakte Transportschlittenführung. Dies geht jedoch nicht auf Kosten des freilegbaren Anteils der Dachöffnung, weil der Führungsabschnitt 13 beim Zurückfahren des Transportschlittens 14 unter den an den Rand 61 nach hinten anschließenden festen Teil 1 des Daches gleitet.

Bei der abgewandelten Ausführungsform nach Fig. 9 ist der rollenförmige Nocken 30 durch einen Nocken 30' von rechteckigem Querschnitt ersetzt. Dadurch wird die Führung des Deckels 3 während seiner Schwenkbewegung weiter verbessert.

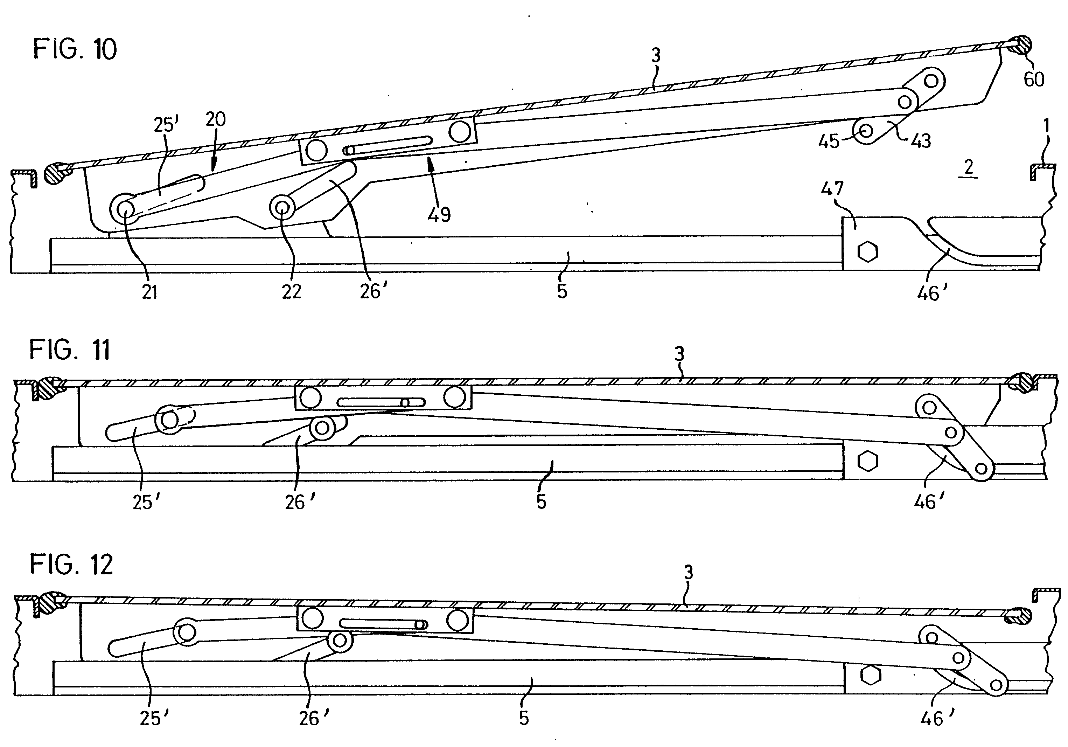

Im Gegensatz zu den zuvor erläuterten Ausführungsbeispielen, bei denen sich der Deckel 3 über das feste Dachteil 1 zurückschieben läßt, zeigen die Figuren 10, 11 und 12 eine Ausführungsform, bei der Deckel 3 mit seiner Hinterkante 4 ausgehend von der ausgestellten Lage gemäß Fig. 10 über die Schließstellung nach Fig. 11 weiter in die in Fig. 12 veranschaulichte Position abgesenkt und dann unter das feste Dachteil 1 geschoben werden kann, um die Dachöffnung 2 freizugeben. Um das Absenken der Deckelhinterkante unter die Hinterkante der Dachöffnung 2 zu erlauben, ist anstelle der Dichtung 28 eine den Rand des Deckels 3 umgebende Dichtung 60 vorgesehen. Entsprechend dem geänderten Funktionsablauf sind die Kulissenschlitze 25', 26' und der Fangschlitz 46' in umgekehrter Richtung geneigt. Aufbau und Funktion des Daches entsprechen im übrigen aber im wesentlichen denjenigen der zuvor erläuterten Ausführungsbeispiele und bedürfen daher keiner weiteren Beschreibung.

**Patentansprüche**

1. Hebeschiebedach für Fahrzeuge mit einem dem wahlweisen Verschließen und mindestens teilweisen Freigeben einer Dachöffnung (2) dienenden Deckel (3), der mittels einer Betätigungseinrichtung (14, 20) ausgehend von einer Schließstellung um eine an oder nahe seinem vorderen Ende (27) liegende Querachse unter Anheben seiner Hinterkante (4) in eine Schräglage verschwenkbar und entlang von zu beiden Seiten der Dachöffnung (2) verlaufenden Führungsschienen (5) nach hinten in eine Offenstellung verschiebbar ist, sowie mit einer in Abhängigkeit von der Deckelverstellbewegung selbsttätig verstellbaren Fangeinrichtung (42), die zum Niederhalten des hinteren Deckelendes (4) in der Deckelschließstellung mit einem Widerlager (47) in Eingriff bringbar ist und in ständigem Eingriff mit einem, z. B. als Transportschlitten (14) ausgebildeten Antriebsglied steht, das während der Schwenkbewegung der Deckelhinterkante (4) in Absenkrichtung der Fangeinrichtung (42) eine Zusatzbewegung gegenüber dem Deckel aufzwingt, dadurch gekennzeichnet, daß das Widerlager (47) an einem feststehenden Teil (Führungsschiene 5) des Daches angebracht ist, während die verstellbare Fangeinrichtung (42) am Deckel (3) montiert ist und dessen Verstellbewegung mitmacht, und daß das Antriebsglied (14) während der Schwenkbewegung der Deckelhinterkante (4) auch in Hochstellrichtung der Fangeinrichtung (42) eine Zusatzbewegung gegenüber dem Deckel (3) aufzwingt, die in der Hochstellrichtung die Aufwärtsbewegung der Dekkelhinterkante (4) unterstützt.

2. Hebeschiebedach nach Anspruch 1, dadurch gekennzeichnet, daß die Fangeinrichtung (42) einen nahe der Deckelhinterkante (4) am Deckel (3) angelenkten Fanghebel (43) und ein Gestänge (49) zum Zwangsverschwenken des Fanghebels in Abhängigkeit von der Deckelschwenkbewegung aufweist

3. Hebeschiebedach nach Anspruch 1 oder 2, dadurch gekennzeichnet, daß die Betätigungseinrichtung mit Transportschlitten (14) und Kulissenführung (20) zwei Transportschlitten (14) aufweist, von denen jeweils einer entlang jeder Führungsschiene (5) verschiebbar geführt ist, und daß die beiden Transportschlitten (14) mit einem vorderen Teil des Deckels (3) über Kulissenführungen (20) verbunden sind, die durch begrenzte Verschiebung der Transportschlitten (14) in Längsrichtung der Führungsschienen gegenüber dem Deckel die Deckelschwenkbewegung erzwingen.

4. Hebeschiebedach nach Anspruch 3, dadurch gekennzeichnet, daß die Transportschlitten (14) zugleich das Antriebsglied für die Fangeinrichtung (42) bilden.

5. Hebeschiebedach nach Ansprüchen 2 bis 4, dadurch gekennzeichnet, daß das von dem Fanghebel (43) abliegende Ende des Gestänges (49) an dem Transportschlitten (14) angelenkt ist.

6. Hebeschiebedach nach Anspruch 5, dadurch gekennzeichnet, daß das Gestänge (49) aus zwei im wesentlichen in Deckellängsrichtung verlaufenden Gestängeteilen (48, 50) besteht, deren einander zugewendete Enden gelenkig miteinander verbunden sind.

7. Hebeschiebedach nach Anspruch 6, dadurch gekennzeichnet, daß das die beiden Gestängeteile verbindende Gelenk mit Bezug auf den Deckel längsverschiebbar geführt ist.

8. Hebeschiebedach nach einem der Ansprüche 3 bis 7, dadurch gekennzeichnet, daß jede der Kulissenführungen (20) zwei in Richtung der Führungsschienen (5) gegeneinander versetzte Kulissenschlitze (25, 25', 26, 26') und zwei Kulissenstifte (21, 22) aufweist, von denen jeder in jeweils einen der Kulissenschlitze eingreift.

9. Hebeschiebedach nach Anspruch 8, dadurch gekennzeichnet, daß die Kulissenschlitze (25, 25', 26, 26') derart ausgerichtet sind, daß die Querachse, um die der Deckel (3) schwenkt, mit der vorderen Deckelkante (27) im wesentlichen zusammenfällt.

10. Hebeschiebedach nach einem der Ansprüche 3 bis 9, dadurch gekennzeichnet, daß die Transportschlitten (14) jeweils mindestens einen Kulissenstift (21, 22) tragen, der in einen Kulissenschlitz (25, 25', 26, 26') eines Deckelträgers (24) eingreift, der sich in Deckellängsrichtung erstreckt.

11. Hebeschiebedach nach Ansprüchen 5 und 10, dadurch gekennzeichnet, daß das von dem Fanghebel (43) abliegende Ende des Gestänges (49) an dem vorderen Kulissenstift (21) angelenkt ist.

12. Hebeschiebedach nach einem der vorhergehenden Ansprüche, gekennzeichnet durch eine selbsttätig wirksam werdende Sperre mit Sperrhebel (38), die bei ausgestelltem Deckel (3) eine Formschlußverbindung zwischen dem Deckel und der Betätigungseinrichtung mit Transportschlitten (14) und Kulissenführung (20) herstellt.

13. Hebeschiebedach nach Ansprüchen 3 und 12, dadurch gekennzeichnet, daß die Sperre einen die Kulissenführung (20) verriegelnden Sperrhebel (38) aufweist.

14. Hebeschiebedach nach Ansprüchen 10 und 13, dadurch gekennzeichnet, daß der Sperrhebel (38) mit dem Dekkel (3) in Gelenkverbindung steht und bei ausgestelltem Deckel mit einem Kulissenstift (22) des Transportschlittens (14) verriegelt wird.

15. Hebeschiebedach nach Anspruch 13 oder 14, gekennzeichnet durch einen in der Bewegungsbahn des Transportschlittens (14) sitzenden Auslöser (40) zum Entriegeln des Sperrhebels (38) in dem der Schwenkbewegung des Deckels (3) entsprechenden Verschiebebereich des Transportschlittens.

16. Hebeschiebedach nach einem der vorhergehenden Ansprüche, dadurch gekennzeichnet, daß in die Betätigungseinrichtung mit Transportschlitten (14) und Kulissenführung (20) zu beiden Deckelseiten eine den Deckel (3) in Hochstellrichtung vorspannende Feder (58) eingebaut ist.

17. Hebeschiebedach nach einem der Ansprüche 3 bis 16, dadurch gekennzeichnet, daß die am Transportschlitten (14) angebrachten Teile, z. B. die Kulissenstifte (21, 22) der Kulissenführung (20) am vorderen Transportschlittenende sitzen und der Transportschlitten einen mit der zugehörigen Führungsschiene (5) in Eingriff stehenden, nach hinten über die Kulissenführung hinaus verlängerten Führungsabschnitt (13) aufweist.

18. Hebeschiebedach nach einem der vorhergehenden Ansprüche, gekennzeichnet durch eine Arretierung (31), die ein Verschieben des Deckels (3) nach vorne während der Deckelschwenkbewegung verhindert.

19. Hebeschiebedach nach Anspruch 18, dadurch gekennzeichnet, daß der Deckel (3) während einer Deckelschwenkbewegung mittels der Arretierung (31) auch gegen eine Verschiebebewegung nach hinten gesichert ist.

20. Hebeschiebedach nach Ansprüchen 18 und 19, dadurch gekennzeichnet, daß mit dem Deckel (3) ein Nocken (30, 30') verbunden ist, der während der Deckelschwenkbewegung in einem fest angeordneten, zu der Deckelverschieberichtung im wesentlichen senkrechten Nockenschlitz (33) gehalten ist und von dem Nokkenschlitz freikommt, wenn der Deckel die voll ausgestellte Lage erreicht hat.

21. Hebeschiebedach nach einem der vorhergehenden Ansprüche, dadurch gekennzeichnet, daß der Deckel (3) nach Anheben seiner Hinterkante (4) über einen festen Teil (1) des Dachs nach hinten verschiebbar ist.

22. Hebeschiebedach nach einem der Ansprüche 1 bis 20, dadurch gekennzeichnet, daß der Deckel (3) nach Absenken seiner Hinterkante (4) unter einen festen Teil (1) des Dachs nach hinten verschiebbar ist.

## Claims

1. A tilting and sliding roof for vehicles, having a panel (3) serving for the optional closing and at least partial uncovering of a roof aperture (2), which panel can be pivoted from a closed position into an inclined position, thereby raising its rear edge (4), by means of an actuating means (14, 20) about a transverse axis disposed at or near to its front end (27), and which can be slid rearwards into an open position along guide rails (5) extending on either side of the roof aperture (2), and also having a catch device (42) which is automatically adjustable as a function of the panel displacement, which can be brought into engagement with an abutment (47) for holding down the rear of the panel (4) in the panel closed position and which is in permanent engagement with a drive member, for example in the form of a transfer slide (14), which during the pivotal movement of the panel rear edge (4) in the downward direction constrains an additional movement of the catch device (42) relative to the panel, characterised in that the abutment (47) is mounted on a stationary part (guide rail 5) of the roof, whereas the adjustable catch device is installed on the panel (3) and follows the displacement thereof, and in that during the pivotal movement of the panel rear edge (4) in the pivoting-out direction the drive member (14) also constrains an additional movement in the pivoting-out direction of the catch device (42) relative to the panel (3), this latter movement assisting the upward movement of the panel rear edge (4).

2. A tilting and sliding roof according to Claim 1, characterised in that the catch device (42) has a catch lever (43) articulated to the panel (3) near to the panel rear edge (4) and has a linkage (49) for the constrained pivoting of the catch lever as a function of the panel pivotal movement.

3. A tilting and sliding roof according to Claim 1 or 2, characterised in that the actuating means with transfer slide (14) and link guide (20) has two transfer slides (14), each of which is guided so that it can slide along a respective guide rail (5), and in that the two transfer slides (14) are connected to a front part of the panel (3) via link guides (20) which, as a result of limited displacement of the transfer slides (14) in the longitudinal direction of the guide rails relative to the panel, constrain the panel pivotal movement.

4. A tilting and sliding roof according to Claim 3, characterised in that the transfer slides (14) simultaneously constitute the drive member for the catch device (42).

5. A tilting and sliding roof according to Claims 2 to 4, characterised in that the end of the linkage (49) remote from the catch lever (43) is articulated to the transfer slide (14).

6. A tilting and sliding roof according to Claim 5, characterised in that the linkage (49) comprises two linkage parts (48, 50) which extend substantially in the longitudinal direction of the panel and the mutually facing ends of which are articulatedly connected to one another.

7. A tilting and sliding roof according to Claim 6, characterised in that the articulation connecting the two linkage parts is guided so than it can slide longitudinally in relation to the panel.

8. A tilting and sliding roof according to any one of Claims 3 to 7, characterised in that each of the link guides (20) has two link slots (25, 25', 26, 26') offset relative to one another in the direction of the guide rails (5) and two link pins (21, 22), each of which engages respectively in one of the link slots.

9. A tilting and sliding roof according to Claim 8, characterised in that the link slots (25, 25', 26, 26') are so aligned that the transverse axis, about which the panel (3) pivots, substantially coincides with the front panel edge (27).

10. A tilting and sliding roof according to any one of Claims 3 to 9, characterised in that the transfer slides (14) each carry at least one link pin (21, 22) which engages in a link slot (25, 25', 26, 26') of a panel support (24) which extends in the longitudinal direction of the panel.

11. A tilting and sliding roof according Claims 5 and 10, characterised in that the end of the linkage (49) remote from the catch lever (43) is articulated to the front link pin (21).

12. A tilting and sliding roof according to any one of the preceding Claims, characterised by a locking means with a locking lever (38) which, when the panel (3) is pivoted out, establishes a form-locking connection between the panel and the actuating means with the transfer slide (14) and the link guide (20).

13. A tilting and sliding roof according to Claims 3 and 12, characterised in that the locking means has a locking lever (38) which locks the link guide (20).

14. A tilting and sliding roof according to Claims 10 and 13, characterised in that the locking lever (38) is in articulated connection with the panel (3) and, when the panel is pivoted out, is locked by a link pin (22) of the transfer slide (14).

15. A tilting and sliding roof according to Claim 13 or 14, characterised by a release member (40), which is disposed in the path of movement of the transfer slide (14), for releasing the locking lever (38) in the displacement region of the transfer slide corresponding to the pivotal movement of the panel (3).

16. A tilting and sliding roof according to any one of the preceding Claims, characterised in that a spring (58), which preloads the panel (3) in pivoting-out direction, is installed in the actuating means with the transfer slide (14) and the link guide (20) on either side of the panel.

17. A tilting and sliding roof according to any one of Claims 3 to 16, characterised in that the parts mounted on the transfer slide (14), e. g. the link pins (21, 22) of the link guide (20), are disposed on the front end of the transfer slide and the transfer slide has a guide portion (13) in engagement with the associated guide rail (5) and extended rearwards beyond the link guide.

18. A tilting and sliding roof according to any one of the preceding Claims, characterised by a locating means (31) which prevents any forward displacement of the panel (3) during the panel pivotal movement.

19. A tilting and sliding roof according to Claim 18, characterised in that during the panel pivotal movement the panel (3) is also secured against rearward displacement by the locating means (31).

20. A tilting and sliding roof according to Claims 18 and 19, characterised in that a cam (30, 30') is connected to the panel (3), which during the panel pivotal movement is retained in a stationary cam slot (33) disposed substantially perpendicular to the direction of panel displacement and which is disengaged from the cam slot when the panel reaches the fully pivoted-out position.

21. A tilting and sliding roof according to any one of the preceding Claims, characterised in that the panel (3) can slide rearwards after its rear edge (4) has been raised above a fixed part (1) of the roof.

22. A tilting and sliding roof according to any one of Claims 1 to 20, characterised in that the panel (3) can slide rearwards after its rear edge (4) has been lowered below a fixed part (1) of the roof.

## Revendications

1. Toit levant et coulissant pour véhicules comportant un couvercle (3) servant à volonté à la fermeture et à la libération d'au moins en partie d'une ouverture de toit (2), qui peut pivoter au moyen d'un dispositif de manœuvre (14, 20), à partir d'une position de fermeture, autour d'un axe transversal situé sur ou à proximité de son extrémité antérieure (27) en relevant son bord arrière (4) dans une position oblique et qui est déplaçable vers l'arrière dans une position d'ouverture (2) le long de glissières de guidage (5) s'étendant des deux côtés de l'ouverture du toit (2), ainsi qu'un dispositif d'arrêt (42) réglable automatiquement en fonction du mouvement de déplacement du couvercle qui peut être mis en prise avec une butée (47) pour le maintien de l'extrémité arrière du couvercle (4) en position de fermeture de couvercle, de même qu'en prise constante avec un organe d'entraînement constitué par un coulisseau de transport (14) qui pendant le mouvement de pivotement de bord arrière du couvercle (4) en direction de l'abaissement impose au dispositif d'arrêt (42) un déplacement supplémentaire par rapport au couvercle, caractérisé en ce que la butée (47) est fixée sur une partie fixe (glissière de guidage (5) du toit, tandis que le dispositif d'arrêt (42) réglable est monté sur le couvercle (3) et participe à son mouvement de déplacement, et en ce que le mouvement de déplacement du bord arrière du couvercle (4) impose également en direction du relèvement un déplacement supplémentaire du dispositif d'arrêt (42) par rapport au couvercle (3) qui, en direction du relèvement, aide au déplacement vers le haut du bord arrière du couvercle (4).

2. Toit levant et coulissant selon la revendication 1, caractérisé en ce que le dispositif d'arrêt (42) présente une clenche (43) articulée sur le couvercle (3) près du bord arrière du couvercle (4) et une tringlerie (49) pour le pivotement forcé de la clenche en fonction du mouvement de pivotement du couvercle.

3. Toit levant et coulissant selon la revendication 1 ou 2, caractérisé en ce que le dispositif de manœuvre avec coulisseau de transport (14) et guide de coulisse (20) présente deux coulisseaux de transport (14), dont chacun d'eux est respectivement guidé déplaçable le long d'une glissière de guidage (5) et en ce que les deux coulisseaux de transport (14) sont reliés à une partie antérieure du couvercle (3) au moyen de guides de coulisse (20) qui, par suite du déplacement limité par rapport au couvercle des coulisseaux de guidage imposent le mouvement de déplacement du couvercle.

4. Toit levant et coulissant selon la revendication 3, caractérisé en ce que les coulisseaux de transport (14) constituent en même temps l'organe d'entraînement du dispositif d'arrêt (42).

5. Toit levant et coulissant selon les revendications 2 à 4, caractérisé en ce que l'extrémité de la tringlerie (49) qui est éloignée de la clenche (43) est articulée sur le chariot de transport (14).

6. Toit levant et coulissant selon la revendication 5, caractérisé en ce que la tringlerie (49) est constituée par deux parties de tringlerie (48, 50) s'étendant sensiblement suivant la direction longitudinale du couvercle et dont les extrémités en regard sont reliées entre elles par une articulation.

7. Toit levant et coulissant selon la revendication 6, caractérisé en ce que l'articulation reliant les deux parties de tringlerie est· guidée avec mobilité longitudinale par rapport au couvercle.

8. Toit levant et coulissant selon l'une des revendications 3 à 7, caractérisé en ce que chacun des guides de coulisse (20) présente deux fentes de coulisse (15, 25', 26, 26') décalées mutuellement en direction des glissières de guidage (5) et deux chevilles de coulisse (21, 22), dont chacune est respectivement engagée dans l'une des fentes de coulisse.

9. Toit levant et coulissant selon la revendication 8, caractérisé en ce que les fentes de coulisse (25, 25', 26, 26') sont alignées de telle sorte que l'axe transversal autour duquel pivote le couvercle coïncide sensiblement avec le bord antérieur du couvercle (27).

10. Toit levant et coulissant selon l'une des revendications 3 à 9, caractérisé en ce que les coulisseaux de transport (14) portent respectivement au moins une cheville de coulisse (21, 22) qui s'engage dans une fente de coulisse (25, 25', 26, 26') d'un support de couvercle (26) s'étendant en direction longitudinale du couvercle.

11. Toit levant et coulissant selon les revendications 5 à 10, caractérisé en ce que l'extrémité de la tringlerie (49) qui est éloignée de la clenche (43) est articulée sur la cheville de coulisse antérieure (21).

12. Toit levant et coulissant selon l'une des revendications qui précèdent, caractérisé par un arrêt activé automatiquement avec un levier d'arrêt (38) qui, le couvercle étant levé, établit une liaison par interpénétration par la forme entre le couvercle et le dispositif de manoeuvre avec coulisseau de transport (14) et guide de coulisse (20).

13. Toit levant et coulissant selon les revendications 3 à 12, caractérisé en ce que l'arrêt présente un levier d'arrêt (38) verrouillant le guide de coulisse (20).

14. Toit levant et coulissant selon les revendications 10 à 13, caractérisé en ce que le levier d'arrêt (38) se tient en liaison articulée avec le couvercle et, le couvercle étant levé, est verrouillé par une cheville de coulisse (22) du coulisseau de transport (14).

15. Toit levant et coulissant selon la revendication 13 ou 14, caractérisé par un déclencheur (40) fixé sur le parcours de déplacement du coulisseau de transport (14) pour débloquer le levier d'arrêt (38) dans la zone de déplacement du coulisseau de transport correspondant au mouvement de pivotement du couvercle (3).

16. Toit levant et coulissant selon l'une des revendications qui précèdent, caractérisé en ce qu'il est monté dans le dispositif de manœuvre avec coulisse de transport (14) et guide de coulisse (20), des deux côtés du couvercle, un ressort (58) mettant en précontrainte le couvercle (3) en direction du levage.

17. Toit levant et coulissant selon l'une des revendications 3 à 16, caractérisé en ce que les parties fixées sur le coulisseau de transport, telles que les chevilles de coulisse (21, 22) du guide de coulisse (20) sont fixées à l'extrémité antérieure du coulisseau de transport et en ce que le coulisseau de transport présente un segment de guidage (13) qui est en prise avec la glissière de guidage correspondante (5) et se prolonge vers l'arrière au-delà du guide de coulisse.

18. Toit levant· et coulissant selon l'une des revendications qui précèdent, caractérisé par un élément d'arrêt (31) qui interdit un déplacement du couvercle vers l'avant pendant le mouvement de pivotement du couvercle.

19. Toit levant et coulissant selon la revendication 18, caractérisé en ce que le couvercle est assuré au moyen de l'élément d'arrêt (31) contre un mouvement de déplacement vers l'arrière pendant le mouvement de pivotement du couvercle.

20. Toit levant et coulissant selon les revendications 18 et 19, caractérisé en ce qu'est relié au couvercle (3) une saillie (30, 30') qui est maintenue pendant le mouvement de pivotement du couvercle dans une fente de saillie (33) disposé fixe et sensiblement perpendiculaire à la direction de déplacement du couvercle et qui est libérée par·la fente de saillie, lorsque le couvercle a atteint la position entièrement levée.

21. Toit levant et coulissant selon l'une des revendications qui précèdent, caractérisé en ce que le couvercle (3) est déplaçable vers l'arrière sur une partie fixe (1) du toit après relèvement de son bord arrière (4).

22. Toit levant et coulissant selon une des revendications 1 à 20, caractérisé en ce que le couvercle (3) est déplaçable vers l'arrière sous une partie fixe (1) du toit, après abaissement de son bord arrière.

FIG. 1

FIG. 2

FIG. 3

44 43

48 3 24

53 55 52 54

25 50 26

45

42

35

47 56

49

21 19 22

5

46

EP 0 154 759 B1

FIG. 4

VIII

50

52 55 53

48 3

43 44 24

25 26

5 49

45 47

VIII

FIG. 5

EP 0 154 759 B1

FIG. 6

FIG. 7

## FIG. 8

## FIG. 9

FIG. 10

FIG. 11

FIG. 12

EP 0 154 759 B1